# EUROPÄISCHE PATENTSCHRIFT

(11) **EP 2 092 465 B1**
(45) Veröffentlichungstag und Bekanntmachung des Hinweises auf die Patenterteilung: **19.01.2011**
(21) Anmeldenummer: 07820984.8
(22) Anmeldetag: 05.10.2007
(51) Int. Cl.: G06K 15/02

(54) **VERFAHREN UND SYSTEM ZUM AUTOMATISCHEN AUFBEREITEN VON DRUCKDATEN FÜR EINEN DRUCKVORGANG**
METHOD AND SYSTEM FOR THE AUTOMATIC PROCESSING OF PRINTING DATA FOR A PRINTING OPERATION
PROCÉDÉ ET SYSTÈME DE PRÉPARATION AUTOMATIQUE DE DONNÉES D'IMPRESSION POUR UNE OPÉRATION D'IMPRESSION

(30) Priorität: 06.10.2006 DE 102006047436
(43) Veröffentlichungstag der Anmeldung: 26.08.2009
(73) Patentinhaber: OCÉ Printing Systems GmbH, 85586 Poing (DE)
(72) Erfinder: HAS, Michael, 85435 Erding (DE)
(74) Vertreter: Schaumburg, Thoenes, Thurn, Landskron, Eckert
(86) Internationale Anmeldenummer: PCT/EP2007/060611
(87) Internationale Veröffentlichungsnummer: WO 2008/040810

(56) Entgegenhaltungen:
- EP-A- 0 674 289
- US-A1- 2006 008 146

## Beschreibung

Die Erfindung betrifft ein Verfahren und ein System zum automatischen Aufbereiten von Druckdaten für einen Druckvorgang.

Aus der EP 1 290 628 B1 ist ein Verfahren zum Erstellen und Ausgeben von Druckseiten bekannt. Bei diesem Verfahren wird mittels eines ernsten Programmmoduls, wie z.B. eines Textverarbeitungsprogrammes oder eines DTP-Programmes eine Druckseite erstellt, die mehrere Blöcke enthält. Jeder Block enthält Bilddaten von Bildelementen. Jedem Block wird manuell ein Darstellungsparameter zugeordnet, der die Bildeigenschaften dieses Blockes charakterisiert. Eine Ausgabeeinheit, wie z.B. ein Drucker oder ein Bildschirm, geben die Bilddaten (d.h. alle, Daten, die Text, Layout und Bild beschreiben) aus. Für die Ausgabe der Bilddaten werden diese blockweise umgewandelt, wobei die Wandlungsprozeduren durch diese Darstellungsparameter der einzelnen Blöcke festgelegt sind. Mehrere dieser Wandluhgsprozeduren bilden Bildverarbeitungs-Prozeduren. Sie umfassen insbesondere Weichzeichnungs-, Hartzeichnungs-, Kantenglättungs-, Schriftenglättungs-, Segmentierungs-, Farbentiefenänderungs-, Auflösungsänderungs-, Helligkeitsänderungs-, Kontraständerungs- und Farbintensitätsänderungs-Prozeduren.

Bei diesem Verfahren wird erreicht, dass durch die von einer Bedienperson beim Erstellen der Druckseite jedem_Block zugeordneten Darstellungsparameter automatisch geeignete Bildverarbeitungs-Prozeduren ausgewählt werden können. Damit wird der Druckvorgang an einem Drucker für jeden einzelnen Block optimiert.

Aus der US 2006/008146-A1 ist ein Verfahren zum automatischen Aufbezeiten von Druckdaten für einen Druckvorgang bekannt, mit der Schritten: Einlesen von Druckdaten: Bereitstellen der Druckdaten Zusammen mit den automatisch ermittelten Darstellüngsparametern zur Steuerung eines Druckvorgangs

In der WO 01/77805 A2 ist ein Verfahren zum Erstellen und Ausgeben eines Dokumentes beschrieben, bei dem mit Hilfe eines Erstellungs-Programmmoduls das Dokument erstellt wird. Das Dokument kann in mehrere Abschnitte aufgeteilt sein und jedem Abschnitt ist ein Darstellungsparameter zugeordnet. Mit diesem Darstellungsparameter wird ein Ausgabeparametersatz festgelegt. Die Darstellungsparameter werden vom Benutzer manuell eingestellt. Die Zuordnung der Darstellungsparameter kann auch mit Hilfe eines Programmmoduls erfolgen. Hierbei werden die Abschnitte des Dokumentes nach bestimmten Zeichenfolgen untersucht. Bei Übereinstimmung von Wörtern eines durchsuchten Abschnittes wird mit Hilfe einer logischen Verknüpfung diesem Abschnitt ein entsprechender Darstellungsparameter automatisch zugeordnet.

Aus der EP 0 674 289 B1 geht ein Verfahren zum Steuern des Druckens einer Hard-Copy hervor. Die Hard-Copy kann auf einer Seite zumindest zwei Elemente der Elemente (A) Texte, (B) Grafikbilder, (C) photographische Bilder umfassen. Mit dem Verfahren werden diese Elemente unterschieden. Es werden Statistiken für jedes unterschiedliche Dokument gesammelt. Entsprechend dieser Statistiken werden druckerspezifische Ansteuerungen erzeugt, um die einzelnen Elemente mit möglichst optimaler Qualität auf dem jeweils zur Verfügung stehenden Druckern zu drucken. Die einzelnen Elemente werden grundsätzlich aufgrund ihres Datenformates unterschieden. Es wird auch vorgeschlagen, dass zur Unterscheidung dieser-Elemente eine "spatial frequency analysis" eines Bit-maps durchgeführt wird.

Aus der US 5,825,944 geht ein Verfahren hervor, mit dem neue Attribute editiert werden können, die bestimmten Blöcken in einem gescannten Bild zugewiesen worden sind. Mit diesem Verfahren sollen automatisch erzeugte Attribute korrigiert werden. Diese Attribute enthalten den Ort der Blöcke, die Größe der Daten, die Art der Bilddaten (Text, Tabelle, Bild, photographisches Bild, usw.), unter-Attribute und Zeiger die auf übergeordnete bzw. untergeordnete Blöcke verweisen. Die entsprechenden Daten werden in einem hierarchischen Baum dargestellt, wobei jede Verzweigungsstelle des Baumes einem Block entspricht. Da die Überprüfung der Attribute manuell erfolgt, können hier nur Attribute gesetzt werden, die vom Benutzer durch in-Augenschein-Nahme erkannt werden. Diese Attribute beschreiben vor allem die Art der Daten.

Aus Bernd Jaehne Digital Image Processing, 6. überarbeitete Ausgabe gehen die Grundlagen der digitalen Bildverarbeitung hervor. Insbesondere ist im Abschnitt "III Feature Extraction", Seite 299-448, erläutert, wie man automatisch aus Bildern bestimmte Merkmale extrahieren kann. In Kapitel 16 "Segmentation", Seite 449 bis 462, ist angegeben, wie in Bildern automatisch Objekte segmentierte werden können.

Vom Offset-Druck ist es seit langem bekannt, dass in größerer Auflage zu druckende Druckdaten zunächst von einem Bediener der Druckvorrichtung manuell analysiert werden. Der Bediener muss hierzu spezielle Erfahrungen im Druckbereich besitzen und erkennen, welche Eigenschaften des zu druckenden Dokumentes für die Einstellung der Druckvorrichtung relevant sind. Beim Drucken einer Landkarte können z.B. große zusammenhängende blauen Flächen, die Meere oder Seen darstellen, mit relativ geringer Auflösung gedruckt werden, wohingegen eine schwarze Beschriftung oder die feinen schwarzen, roten oder gelben Linien, die Straßen und Wege darstellen, sehr präzise mit hoher Auflösung gedruckt werden sollen. Ein erfahrener Druckvorstufendienstleister erkennt auch, ob ein Bild mit einer Hartzeichnungsfunktion oder Weichzeichnungsfunktion gedruckt werden soll, wobei dies auch bereichsweise unterschiedlich sein kann. Weiterhin kann ein erfahrener Drucker die Schärfe- und Kontrasteinstellung vornehmen. Diese Einstellung führt der Druckvorstufendienstleister alleine aufgrund der in-Augenscheinnahme des zu druckenden Dokumentes und seiner Berufserfahrung ohne zusätzliche Hilfsmittel aus.

Im elektrofotografischen Hochleistungsdruck ist es jedoch nicht möglich, dass ein erfahrener Drucker jedes zu druckende Dokument manuell prüft und Darstellungsparameter einzeln einstellt. Dies gilt insbesondere für Anwendungen, bei welchem zwar hohe Stückzahlen gedruckt werden, jedoch sich die einzelnen Druckexemplare voneinander unterscheiden. Bei Druckaufträgen, bei welchen Druckdaten unterschiedlicher Quellen zusammengesetzt werden, die dann unmittelbar gedruckt werden sollen, ist es nicht möglich, jede einzelne Druckseite manuell zu überprüfen. Jedoch besitzen elektrofotografische Hochleistungsdrucksysteme die Möglichkeit den Druckvorgang anhand einer Vielzahl von Ausgabeparameter unterschiedlich zu steuern, so dass bei einer einzigen Standardeinstellung für einen Druckauftrag die technischen Möglichkeiten der Druckvorrichtung nicht ausgenutzt werden können.

Deshalb soll mit der vorliegenden Erfindung ein Verfahren zum automatischen Aufbereiten von Druckdaten für einen Druckvorgang geschaffen werden, so dass selbst bei einer elektrofotografischen Hochleistungs-Druckumgebung eine spezifische Druckausgabe erzielt wird.

Die Aufgabe wird durch ein Verfahren mit den Merkmalen des Anspruchs 1 gelöst.

Vorteilhafte Ausgestaltungen der Erfindung sind in den jeweiligen Unteransprüchen angegeben.

Beim erfindungsgemäßen Verfahren zum automatischen Aufbereiten von Druckdaten für einen Druckvorgang werden die Schritte nach Anspruch 1 ausgeführt.

Das erfindungsgemäße Verfahren zeichnet sich dadurch aus, dass die Segmente mit einem Bildanalyseverfahren analysiert werden. Mit einem solchen Bildanalyseverfahren können physikalische Größen, wie die Farbtiefe, die Schärfe, der Farbraum, der Detailreichtum, die Auflösung, der Kontrast und/oder die Helligkeit des Bildes, ermittelt werden. Aus diesen physikalischen Größen lassen sich auch Bedeutungsinhalte der einzelnen Segmente ermitteln. Hierbei können sehr unterschiedliche Bedeutungsinhalte ermittelt werden. Es gibt sehr grundlegende Bedeutungsinhalte, wie den Verlauf einzelner Kanten und die Bestimmung einzelner Objekte in den Segmenten. Eine höhere Ebene von Bedeutungsinhalten ist die Bestimmung, ob die Segmente Texte, Bilder (mit Ausnahme von fotografischen Bildern) oder fotografische Bilder sind. Unter fotografischen Bildern werden Bilder mit Grau- bzw. Farbstufen verstanden, die typischerweise durch eine Aufnahme mit einer Kamera erzeugt werden. Derartige Bilder können jedoch auch synthetisch hergestellt werden.

In der nächst höheren Ebene von Bedeutungsinhalten wird ermittelt, ob die Segmente Landkarten, technisch/wissenschaftliche Diagramme (Graphen), Pläne, Zeitungen, Rechnungen, personalisierte Werbebriefe, Landschaftsfotografien, Produktfotografien oder Porträtfotografien sind.

Die digitale Bildverarbeitung ist derart weit fortgeschritten, dass derartige Bedeutungsinhalte automatisch ermittelt werden können. Diesbezüglich wird beispielsweise auf Bernd Jähne, Digital Image Processing, 6. überarbeitete und erweiterte Auflage, Springerverlag (ISBN 3-540-24035-7 bzw. ISBN 9-78-3-540-24035-8-3), Abschnitt III "Feature Extraction" Bezug genommen. Hierin ist ausführlich erläutert, wie Bildern Merkmale wie Grauwerte, Kanten, Objekte und dergleichen extrahiert werden.

Die Darstellungsparameter können einerseits die unmittelbar mittels des Bildanalyseverfahrens erhaltenen physikalischen Größen bzw. Eigenschaften des Bildes sein oder andererseits auch die Bedeutungsinhalte umfassen. Die Darstellungsparameter sind somit Parameter, die Segmente der zu druckenden Druckdaten inhaltlich in einer Art und Weise beschreiben, dass dies zur Ansteuerung eines Druckvorganges in der entsprechenden Druckumgebung geeignet sind.

Unter einem "Bildanalyseverfahren" wird ein Verfahren verstanden, mit dem aus den Bilddaten (Pixeldaten bzw. Vektordaten) physikalische Eigenschaften (z.B. Kontrast, Helligkeit, etc.) dem Bild extrahiert werden. In einem solchen Bildanalyseverfahren können auch die Bedeutungsinhalte eines Bildes automatisch extrahiert werden. Die automatische Extraktion von Bedeutungsinhalten ist jedoch kein notwendiges Merkmal der Bildanalyseverfahren.

Durch die Verwendung eines solchen Bildanalyseverfahrens können Druckdaten aus unterschiedlichen Quellen Darstellungsparametern zugeordnet werden. Es besteht somit keine Notwendigkeit, dass beim Erstellen der Druckdaten immer Darstellungsparameter zugeordnet werden. In einer elektrofotografischen Hochleistungsdruckumgebung ist es vielmehr so, dass die Druckdaten oftmals aus unterschiedlichen Quellen stammen und erst im Druckserver oder in einer Druckbearbeitungsstation, die dem Druckserver vorgelagert ist, zu den Druckaufträgen zusammengefügt werden. In einer solchen Umgebung ist es äußerst schwierig.sicherzustellen, dass alle Erzeuger von Druckdaten diese mit Darstellungsparameter versehen.

In der WO 01/77805 A2 ist es zwar offenbart, dass einem bestimmten Abschnitt eines Dokumentes automatisch ein Darstellungsparameter zugeordnet werden kann, wobei dies anhand vorbestimmter Zeichenfolgen erfolgt, die im Text dieses Dokumentes enthalten sind. Bei diesem bekannten Verfahren werden somit lediglich bereits vorliegende Inhalte verwendet, um Darstellungsparameter zuzuordnen. Es werden jedoch keine Bilder einem Bildanalyseverfahren unterzogen. Jedoch nur die Verwendung eines Bildanalyseverfahrens stellt sicher, dass beliebigen Druckdaten, die aus unterschiedlichsten Quellen stammen können, zuverlässig Darstellungsparameter mit der gewünschten Präzision zugeordnet werden.

Das Bereitstellen der Druckdaten zusammen mit den automatisch ermittelten Darstellungsparametern kann sowohl durch Speichern dieser Druckdaten zusammen mit den Darstellungsparametern in einem Druckserver, als auch durch unmittelbares Weiterleiten der Druckdaten und der Darstellungsparameter an den Controller eines Druckgerätes erfolgen. Werden die Druckdaten an einem Druckserver oder an einem sonstigen Computer zum Erzeugen von Druckdaten analysiert und die Darstellungsparameter automatisch mittels eines Bildanalyseverfahrens erzeugt, so ist es zweckmäßig, die Druckdaten und die Darstellungsparameter auf den entsprechenden Computer bzw. Druckserver zu speichern. Diese Druckdaten können dann zu einem geeigneten Zeitpunkt an ein Druckgerät weitergeleitet werden. Es ist auch möglich, mehrere derart vorab analysierte Druckdaten zu einem gemeinsamen Druckauftrag zu verbinden, wobei die Darstellungsparameter der einzelnen Druckdaten in den Druckauftrag mit übernommen werden. Die Ansteuerung des Druckgerätes erfolgt dann, wie es aus der WO 01/77805 A2 bzw. der EP 1 290 628 B1 bekannt ist, durch Erzeugen von Ausgabeparametern anhand der Darstellungsparameter, mit welchen das Druckgerät unmittelbar angesteuert wird.

Andererseits ist es auch möglich, die Druckdaten mit den automatisch ermittelten Darstellungsparametern ohne Zwischenspeicherung direkt an den Controller der Druckgerätes weiterzuleiten, wobei dann die Ansteuerung des Druckvorgangs auch unmittelbar anhand der Darstellungsparameter - also ohne Erzeugung von Ausgabeparametern erfolgen kann.

Ein wesentliches Grundprinzip der vorliegenden Erfindung liegt darin, dass ein Druckgerät mittels der automatisch mit einem Bildanalyseverfahren erhaltenen Darstellungsparameter justiert wird.

Die automatische Zuordnung der Darstellungsparameter erlaubt es auch, für unterschiedliche Druckumgebungen die Darstellungsparameter jeweils mit einer anderen Präzision zu erzeugen. Unter einer Druckumgebung wird ein System mit zumindest einem Druckserver und mehreren Druckern verstanden. Eine Druckumgebung kann auch mehrere Druckserver umfassen. Weist eine Druckumgebung eine Vielzahl unterschiedlicher Druckgeräte auf, die Dokumente in unterschiedlichsten Qualitäten bedrucken können, dann ist es zweckmäßig, die Darstellungsparameter präziser, d.h. mit einer feineren Unterteilung, zu erzeugen, da dann der Druckvorgang entsprechend genauer gesteuert werden kann. Für Druckumgebungen mit einigen wenigen Druckern, die nur mit einem begrenzten Ausgabeparametersatz angesteuert werden können, ist es hingegen nicht notwendig eine derart präzise Aufteilung der Darstellungsparameter zu erzeugen.

Werden die Druckdaten für unterschiedliche Druckumgebungen analysiert, so ist es zweckmäßig zumindest diejenigen Darstellungsparameter automatisch zu erzeugen, mit welchen die Ausgabeparameter erzeugt werden, die in allen Druckumgebungen verwendet werden können bzw. mit den allen Druckumgebungen gemeinsamen Einstellmöglichkeiten angesteuert werden können.

Die Erfindung wird nachfolgend beispielhaft näher anhand der Zeichnungen beschrieben. Die Zeichnungen zeigen in:
- Fig. 1: ein Netzwerk mit einer Druckumgebung und einem Druckvorbereitungscomputer, an dem das erfin- dungsgemäße Verfahren ausgeführt wird,
- Fig. 2: das erfindungsgemäße Verfahren in einem Fluss- diagramm.

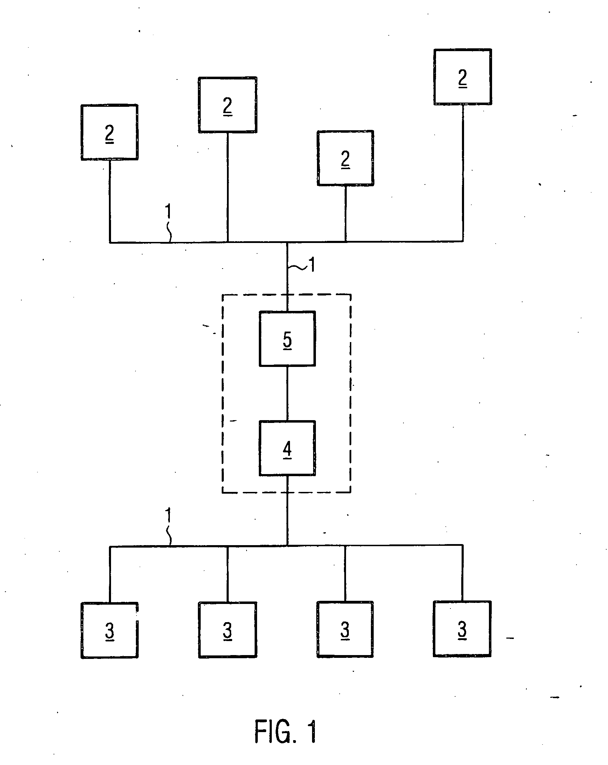

Figur 1 zeigt einen Ausschnitt eines Netzwerkes 1. In dem Netzwerk 1 sind mehrere Client-Computer 2 angeordnet. Auf den Client-Computern 2 sind Programme zum Erzeugen von Druckdaten ausführbar gespeichert. Derartige Programme sind beispielsweise Textprogramme, Zeichenprogramme, DTP-Programme oder andere Programme zum Erzeugen von Druckdaten. Diese Programme können typische Arbeitsplatzprogramme sein, die Druckdaten in einer der üblichen Druckersprachen, wie Postscript oder PCL erzeugen. Es können jedoch auch professionelle Anwendungsprogramme sein, die Druckdaten in einem Dokumentenbearbeitungsdatenstrom, wie z.B. AFP, erzeugen.

Die Druckdaten sollen über das Netzwerk 1 an einem Drucker 3 ausgedruckt werden. Im Netzwerk 1 sind mehrere Drucker 3 vorgesehen, die ihre Druckdaten über einen Druckserver 4 empfangen. Zwischen den Client-Computern 2 und dem Druckserver 4 ist ein Druckvorbereitungscomputer 5 angeordnet. Der Druckvorbereitungscomputer 5 empfängt die Druckdaten der unterschiedlichen Client-Computer 2 und bereitet die Druckdaten zur Weiterleitung an den Druckserver 4 vor. Der Druckvorbereitungscomputer 5 kann auch Druckdaten abspeichern, die zu einem späteren Zeitpunkt mit anderen Druckdaten zu einem Druckauftrag zusammengefügt werden. Der Druckvorbereitungscomputer 5 kann je nach dem, welchen Druckserver bzw. welche Druckserver er mit Druckdaten versorgen soll, unterschiedliche Bildbearbeitungsprozeduren ausführen.

Erfindungsgemäß ist am Druckvorbereitungscomputer 5 ein Computerprogramm zum Ausführen einer Bildbearbeitungsprozedur vorgesehen, mit welcher den Druckdaten automatisch Darstellungsparameter zugeordnet werden.

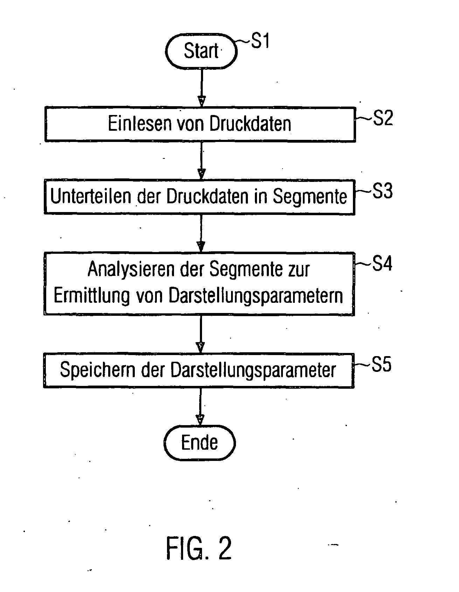

Das erfindungsgemäße Verfahren ist in dem in Figur 2 gezeigten Flussdiagramm dargestellt. Es beginnt mit dem Schritt S1. Im Schritt S2 werden Druckdaten, die von einem Client-Computer an den Druckvorbereitungscomputer 5 übermittelt werden, von diesem eingelesen. Die Druckdaten werden in Segmente unterteilt. Diese Unterteilung der Segmente kann beispielsweise derart erfolgen, dass jede Druckseite ein einzelnes Segment bildet. Oftmals enthalten jedoch die Druckdaten keine seitenweise Unterteilung, wie z.B. bei einem langen Text, der in Abhängigkeit von dem Drucker auf dem ausgedruckt wird in druckerspezifische Seiten aufgeteilt wird. Da am Druckvorbereitungscomputer 5 keine Informationen über den Drucker vorliegen, ist eine druckspezifische Bearbeitung der Druckdateien noch nicht möglich. Die Druckdaten werden dann nach einer anderen Vorschrift in Segmente unterteilt. Es kann auch sein, dass ein bestimmter Satz von eingehenden Druckdaten als ein einziges Segment behandelt wird.

Druckdaten, die Bereiche mit unterschiedlichen Bilddatentypen aufweisen werden vorzugsweise in Segmente unterteilt, wobei jedes Segment einen bestimmten Bilddatentyp umfasst. Unterschiedliche Bilddatentypen sind beispielsweise Textdaten, Bilder in Vektorgrafik oder Bilder in Pixelgrafik bzw. Bitmaps. Jeder Bereich, der einen solchen Bilddatentyp umfasst, wird als separates Segment identifiziert.

Die Segmente können Blöcke mit geradlinigen Begrenzungskanten sein. In der Regel werden sie jedoch beliebig geformte Ausschnitte der Druckdaten sein. Die Segmentierung erfolgt nach an sich bekannten Verfahren. Diesbezüglich wird beispielsweise auf Bernd Jähne, Digital Image Processing, 6. überarbeitete und erweiterte Auflage, Springerverlag (ISBN 3-540-24035-7 bzw. ISBN 978-3-540-24035-8) Kapitel 16 "Segmentation" Bezug genommen. Hierin sind Bildanalyseverfahren beschrieben, mit welchen automatisch ein Bild segmentiert werden kann und die für das vorliegende Verfahren zum automatischen Aufbereiten von Druckdaten und Erzeugen von Darstellungsparametern geeignet sind.

Es ist jedoch auch möglich, eine bereits in den Druckdaten enthaltene Datenstruktur zu übernehmen und demgemäß die Segmente zu unterteilen. Hierbei ist es möglich, dass innerhalb eines Segmentes auch unterschiedliche Bilddatentypen vorgesehen sind.

Die einzelnen Segmente werden einem Bildanalyseverfahren unterzogen (Schritt S4), mit dem zumindest eine oder mehrere physikalische Größen des jeweiligen Bildsegmentes automatisch ermittelt werden. Diese physikalischen Größen sind z.B. die Helligkeit, der Kontrast, die objektabhängige Auflösung, der Detailreichtum eines Bildes, die Schärfe und die Farbdynamik des Bildes. Unter "objektabhängige Auflösung" wird die Auflösung verstanden, die notwendig ist, um den Bildinhalt ohne Informationsverlust darstellen zu können. Je kleiner und feiner die einzelnen Objekte bzw. Elemente des Bildes ausgebildet sind, desto größer muss die objektabhängige Auflösung sein.

Zur Extraktion dieser physikalischen Größe stehen unterschiedliche Verfahren im Stand der Technik zur Verfügung (siehe z.B. Bernd Jähne; Digitale Bildverarbeitung a.a.O.). Diese physikalischen Größen können unmittelbar als Darstellungsparameter für die jeweiligen Segmente gespeichert werden. Sie können auch noch weitergehend analysiert werden, was weiter unten näher beschrieben wird.

Neben den mittels des Bildanalyseverfahrens extrahierten physikalischen Größen können auch im Datensatz der Druckdaten immanent enthaltene Parameter zur Erzeugung der Darstellungsparameter herangezogen werden. Derartige immanent enthaltene Parameter sind z.B. die Auflösung einer Bitmap-Datei, die von der objektabhängigen Auflösung zu unterscheiden ist und die angibt in welcher Auflösung die Bildpunkte der Bitmap-Datei gespeichert sind. Ein weiterer im Datensatz immanent enthaltener Parameter ist die Farbtiefe, die typische Werte von 1 Bit, 10 Bits, 12 Bits annehmen kann. Die Datensätze enthalten auch meistens Angaben über den jeweiligen Bilddatentyp, so dass diese Daten direkt den Druckdaten entnommen werden können und nicht immer mittels des Bildanalyseverfahrens extrahiert werden müssen.

Auch diese immanent in der Datenstruktur des Datensatzes enthaltenen Daten können als Darstellungsparameter abgespeichert werden.

Auf Grundlage dieser physikalischen Größen und der in der Datenstruktur immanent enthaltenen Parameter, die im folgenden als immanente Parameter bezeichnet werden, kann eine weitere Analyse nach Bedeutungsinhalten durchgeführt werden. Im vorliegenden Ausführungsbeispiel werden Bedeutungsinhalte dreier Ebenen, nämlich einer Basisebene, einer mittleren Ebene und einer oberen Ebene, unterschieden.

Die Basisebene umfasst grundlegende Bedeutungsinhalte, wie z.B. Kanten und einzelne Objekte in den jeweiligen Segmenten. Es sind unterschiedlichen Verfahren zum Detektieren von Kanten und Objekten bekannt.

Die mittlere Ebene der Bedeutungsinhalte umfasst Texte, Bilder (mit Ausnahme fotografischer Bilder) und fotografische Bilder. Fotografische Bilder sind Bilder mit überwiegend Graustufen bzw. Farbverläufen und wenigen einzelnen Linien. Die anderen Bilder sind Bilder mit keinen oder nur Graustufen bzw. Farbverläufe mit kleinen Dynamikbereichen.

Derartige Bilder weisen oftmals dünne, gezeichnete Linien auf.

In der oberen Ebene sind die Bilder und fotografischen Bilder nochmals nach Bedeutungsinhalte unterteilt. So umfassen die Bilder beispielsweise Landkarten, Geschäftsgrafiken, technisch/wissenschaftliche Diagramme (Graphen) und Pläne.

Die fotografischen Bilder werden in der oberen Ebene z.B. in Landschaftsbilder, Porträts und Produktbilder unterteilt.

Es gibt noch eine hierzu übergeordnete Ebene an Bedeutungsinhalten, in welcher mehrere Segmente der Druckdaten zusammengefasst werden, die gemeinsam eine zusammenhängende Druckdateneinheit bilden, die als Werk bezeichnet wird. Derartige Werke sind z.B. Rechnungen, personalisierte Werbebriefe oder Zeitungen. Es ist z.B. bekannt, Zeitungen von bestimmten Verlagen im entfernten Ausland in geringer Auflage auf elektrofotografischen Druckern in einem speziellen Format zu Drucken, damit den Abonnenten dieser Zeitung auch im Ausland die entsprechenden Zeitungsexemplare zur Verfügung gestellt werden können. Die Qualitätsanforderungen an einen solchen Zeitungsdruck sind relativ gering, so dass dieser globale Darstellungsparameter Auswirkungen auf alle Segmente hat. Bei Rechnungen werden hingegen durchschnittliche Qualitätserfordernisse verlangt, wohingegen bei personalisierten Werbebriefen hohe Qualitätserfordernisse an den Ausdruck gestellt werden, damit der Werbebrief erfolgreich sein kann.

Der Typ des Werkes, der auch als Zielgenre bezeichnet wird, erfordert vorbestimmte Verarbeitungsmethoden, auf welche der Drucker entsprechend einzustellen ist. Das Zielgenre stellt somit einen Darstellungsparameter im Sinne der vorliegenden Erfindung dar.

Nachfolgend wird anhand einiger Beispiele erläutert, wie die Darstellungsparameter automatisch aufgefunden werden.

Bei Landkarten bilden die Farben Blau (Meere und Seen) und Grün in der Regel größere zusammenhängende Flächenbereiche, wohingegen die Farben Gelb, Rot und Schwarz mit schmalen Linien vorgesehen sind (Wege, Straßen und Schienen bzw. kleinen Flächen Rot für Gemeinden und Städte). Diese Merkmalsstruktur kann automatisch erfasst und als Landkarte festgestellt werden.

Porträtfotos werden derart detektiert, dass ein Kopf der porträtierten Personen als Objekt erfasst wird. Dieses Bildobjekt hat typische Merkmale in Form und Farbe. Gleiches gilt für Geschäftsgrafiken und technisch/wissenschaftliche Diagramme.

Zur Extraktion der physikalischen Größen der Druckdaten sowie zur Ermittlung der Bedeutungsinhalte werden mathematisch Verfahren, wie Fourieranalyse, Expertensysteme, Filter und/oder neuronale Netze einzeln oder in Kombination angewandt. Weiterhin können zur Extraktion der physikalischen Größen der Druckdaten sowie zur Ermittlung der Bedeutungsinhalte fraktale Bildanalyseverfahren verwendet werden, mit welchen selbstähnliche Abschnitte eines Bildes extrahiert werden. Die Fourieranalyse wird vor allem zum Ermitteln von Frequenzverteilungen hinsichtlich der Helligkeit und/oder Farbe der Bilder verwendet. Diese Analysen werden entweder auf das gesamte Bild oder auf einzelne Farbauszüge angewandt. Bei der Durchführung dieser Analyseverfahren können von einem Segment mehrere Merkmalsbilder erzeugt werden. Ein solches Merkmalsbild ist z.B. ein Bild, was durch Ableiten der Graustufen des Ausgangsbildes erhalten wird. Ein derartiges Bild ist oftmals sehr zweckmäßig zum Ermitteln der Kanten. Anhand mehrerer unterschiedlicher Merkmalsbilder eines Segmentes können die einzelnen oben aufgeführten Darstellungsparameter erhalten werden.

Es gibt immanente Parameter, wie z.B. den Farbraum (schwarz/weiß, HLC, Vollfarbraum), die korrespondierende Darstellungsparameter besitzen, die mittels der Bildanalyse erhalten werden, wie z.B. die Farbverteilung, womit die Menge bzw. die Häufigkeit der jeweiligen Grundfarben in einem bestimmten Farbsegment bezeichnet wird.

Wie es bereits aus der EP 1 290 628 B1 und der WO 01/77895 A2 bekannt ist, können anhand der Darstellungsparameter im

Druckserver 4 oder im Drucker 3 Ausgabeparameter festgelegt werden, die eine segmentoptimierte und druckerspezifische Ausgabe der Druckdaten erlauben. Diese beiden Dokumente werden unter Bezugnahme in die vorliegende Anmeldung aufgenommen.

Ist der Darstellungsparameter beispielsweise der Parameter "Landkarte" so kann die Farbe Blau mit geringer Auflösung gedruckt werden, wohingegen die Farben Rot, Gelb und Schwarz, die die Straßen und Beschriftungen wiedergeben mit hoher Auflösung sehr präzise gedruckt werden sollen. Da das Sehempfinden für die Farbe Schwarz wesentlich stärker als für die Farbe Gelb ausgebildet ist, kann es auch zweckmäßig sein, die Farbe Schwarz mit höherer Auflösung als die Farbe Gelb zu drucken.

Die erfindungsgemäß automatisch erzeugten Darstellungsparameter sind grundsätzlich unabhängig vom Drucker. Die derart mit Darstellungsparametern versehenen Druckdaten können zwischengespeichert werden und zu einem beliebigen Zeitpunkt über einen Druckserver einem Drucker zum Ausdrucken weitergeleitet werden.

Im Rahmen der Erfindung ist es auch möglich, die Darstellungsparameter derart automatisch zu erzeugen, dass sie unmittelbar zur Ansteuerung eines Druckers geeignet sind. Hierdurch kann.der Zwischenschritt des Umsetzens der Darstellungsparameter in Ausgabeparameter entfallen und die Druckdaten und die korrespondierenden Darstellungsparameter können ohne Zwischenspeichern unmittelbar an den Drucker weitergeleitet werden oder in diesem erzeugt werden, um im Drucker eine optimale Einstellung der zur Verfügung stehenden Druckparameter zu bewirken.

Die Analyse der Druckdaten kann auch derart ausgeführt werden, dass in einer Datenbank ein Satz Segmente mit korrespondierenden Darstellungsparametern gespeichert sind, wobei einem Segment die Darstellungsparameter dadurch zugeordnet werden, dass dieses neue Segment mit den in der Datenbank vorhandenen Beispiel-Segmenten verglichen wird und falls das neue Segment mit einem in der Datenbank vorhandenen Beispiel-Segment innerhalb eines gewissen Maßes übereinstimmt werden dem neuen Segment die Darstellungsparameter des vorhandenen Beispiel-Segments, mit dem es übereinstimmt, zugeordnet. Dieses Verfahren kann auch in Kombination mit dem oben beschriebenen Bildanalyseverfahren durchgeführt werden, wobei wenn ein neues Segment nicht durch einen solchen Vergleich analysiert wird, da es keine ausreichend ähnlichen Beispiel-Segmente in der Datenbank gibt, dann wird es in der Datenbank zusammen mit seinen Darstellungsparametern aufgenommen. Hierdurch "lernt" das Verfahren hinzu, wodurch mit zunehmender Benutzung des Verfahrens die Analysezeiten verkürzt werden können, da nun mehr Beispiel-Segmente zur Verfügung stehen.

Es kann auch zweckmäßig sein, in Abhängigkeit von der jeweils vorhandenen Druckumgebung die Darstellungsparameter mit unterschiedlicher Präzision zu erzeugen. Druckumgebungen, die Druckgeräte unterschiedlichster Leistungsstufen in Hinblick auf Qualität und Durchsatz aufweisen und daher insgesamt ein sehr großes Spektrum an Einstellmöglichkeiten des Druckvorganges umfassen können wesentlich präziser auf Darstellungsparameter reagieren. Hier macht es Sinn, die Druckdaten sehr ausführlich und exakt zu analysieren und sehr präzise Darstellungsparameter zu ermitteln. Bei Druckumgebungen mit wenigen ähnlichen Druckern kann es hingegen genügen, wenn z.B. lediglich Druckparameter der Basisebene und mittleren Ebene ermittelt werden.

Da mit dem erfindungsgemäßen Verfahren die Darstellungsparameter automatisch ermittelt werden, ist es nicht notwendig, manuell bei der Erstellung der Druckdaten die Darstellungsparameter zu erzeugen. Mit dem erfindungsgemäßen Verfahren können somit Druckdaten aus beliebigen Quellen bearbeitet werden. Das erfindungsgemäße Verfahren erlaubt auch große Mengen an Druckdaten mit unterschiedlichen Inhalten und/oder unterschiedlichen Jobtickets mit einem elektrofotografischen Drucksystem zu drucken. Mit der Erfindung wird die Flexibilität von elektrofotografischen Drucksystemen, d.h., die Möglichkeit jede Seite mit einem anderen Sujet zu bedrucken, mit Qualitätsmerkmalen des herkömmlichen Offset-Druckes kombiniert, wobei aufgrund der schnellen automatischen Erstellung der Darstellungsparameter weder eine Verzögerung noch eine Beschränkung der Flexibilität des Druckvorganges erfolgt.

Die vorliegende Erfindung ist nicht auf die oben im Beispiel aufgeführten Darstellungsparameter beschränkt. Die oben erläuterten Darstellungsparameter dienen lediglich zur Erläuterung der Erfindung.

Bei einer Weiterbildung der Erfindung werden die mittels der oben erörterten automatischen Bildanalyse erhaltenen Eigenschaften der Druckdaten verwendet, um die Druckdaten zu parametrisieren. Hierdurch können die Druckdaten komprimiert gespeichert werden.

Hierbei werden die einzelnen Farbauszüge mit den Bildanalyseverfahren analysiert und automatisch zusammenhängende Flächen ähnlicher Farbe ermittelt. Derartige Flächen lassen sich einfach durch Angabe der Begrenzungslinien und/oder der Farbe bzw. des Farbverlaufes parametrisieren. Der Farbverlauf kann beispielsweise mittels einer Polynomfunktion dargestellt werden.

Die zusammenhängenden Flächen bzw. Bereiche können mittels Fourieranalyse oder einem Random-Walk-Verfahren ermittelt werden.

Vorzugsweise wird der Farbübergang im Bereich der Begrenzungslinien analysiert und etwa quer zu den Begrenzungslinien verlaufende Farbverlaufsglättungsfunktionen verwendet, um künstliche Farbsprünge im Bereich der Begrenzungslinien zu vermeiden.

Bei einer vorteilhaften Weiterbildung dieses Verfahrens werden nicht nur zusammenhängende Flächen bzw. Bereiche parametrisiert, sondern es werden parametrisierte Bilddaten zusammen mit Verarbeitungshinweisen gespeichert, die angeben, wie die Parametrisierung durchgeführt worden ist. Soll zu einem späteren Zeitpunkt die Parametrisierung der Bilddaten wieder aufgehoben werden, so können unter Berücksichtigung der Verarbeitungshinweise die Bilddaten wesentlich präziser in ein ursprüngliches Format gebracht werden.

Sollten die Bilddaten vor der Parametrisierung einer bestimmten Vorverarbeitung unterzogen werden, so können auch diese Verarbeitungsprozesse beschreibende Verarbeitungshinweise zusammen mit den parametrisierten Bilddaten gespeichert werden. Auch diese Informationen können bei der Wiederherstellung des ursprünglichen Formates sehr hilfreich sein.

Die Erfindung kann folgendermaßen kurz zusammengefasst werden:

Die Erfindung betrifft ein Verfahren und ein System zum automatischen Aufbereiten von Druckdaten für einen Druckvorgang. Mit dem erfindungsgemäßen Verfahren werden automatisch Darstellungsparameter für Druckdaten erzeugt. Die Erzeugung der Darstellungsparameter erfolgt unter anderem mit Hilfe eines Bildanalyseverfahrens, so dass den Druckdaten physikalische Größen extrahiert werden, die direkt oder nach weiterer Analyse als Darstellungsparameter den Druckdaten zugeordnet werden. Anhand der Darstellungsparameter können gemäß bekannter Verfahren Ausgabeparameter ermittelt werden, mit welchen der Druckvorgang gesteuert wird.

### Bezugszeichenliste

- 1: Netzwerk
- 2: Client-Computer
- 3: Drucker
- 4: Druckserver
- 5: Druckvorbereitungscomputer

## Patentansprüche

1. Verfahren zum automatischen Aufbereiten von Druckdaten für einen Druckvorgang, umfassend folgende Schritte:
- Einlesen von Druckdaten,
- Bereitstellen der Druckdaten zusammen mit den automatisch ermittelten Darstellungsparametern zur Steuerung eines Druckvorganges, **gekennzeichnet durch** die weiteren Schritte:
- Unterteilen der Druckdaten in Segmente,
- Analysieren der Segmente mit einem Bildanalyseverfahren zur automatischen Ermittlung von Darstellungsparametern für die jeweiligen Segmente, wobei der Bildinhalt der Segmente auf Farbtiefe, Kontrast Schärfe, Helligkeit, Farbraum, Detailreichtum und/oder Auflösung analysiert wird.

2. Verfahren nach Anspruch 1,
**dadurch gekennzeichnet,**
**dass** in Abhängigkeit des jeweiligen Datentyps des Segmentes ein bestimmtes Bildanalyseverfahren ausgewählt wird.

3. Verfahren nach Anspruch 1 oder 2,
**dadurch gekennzeichnet,**
**dass** als Bildanalyseverfahren eine Fourieranalyse oder Frequenzanalyse zur Ermittlung der Auflösung der Druckdaten eines Segmentes verwendet wird.

4. Verfahren nach einem der Ansprüche 1 bis 3,
**dadurch gekennzeichnet,**
**dass** als Bildanalyseverfahren ein Expertensystem verwendet wird, dem als Eingangswerte die Druckdaten des Segmentes, die Formatdaten einschließen können, und ggfs. Mittels Voranalyseverfahren bestimmte Parameter zur Verfügung stehen, welchen die Darstellungsparameter zugeordnet werden.

5. Verfahren nach einem der Ansprüche 1 bis 4,
**dadurch gekennzeichnet,**
**dass** als Bildanalyseverfahren ein neuronales Netzwerk verwendet wird, dem als Eingangswerte die Druckdaten des Segmentes, die Formatdaten einschließen können, und ggfs. Mittels Voranalyseverfahren bestimmte Parameter zur Verfügung stehen, welchen die Darstellungsparameter zugeordnet werden.

6. Verfahren nach einem der Ansprüche 1 bis 5,
**dadurch gekennzeichnet,**
**dass** als Bildanalyseverfahren ein fraktales Bildanalyseverfahren verwendet wird, mit dem selbst ähnliche Abschnitte extrahiert werden können.

7. Verfahren nach einem der Ansprüche 1 bis 6,
**dadurch gekennzeichnet,**
**dass** in einem Job-Ticket enthaltene Informationen zur Ermittelung oder Präzisierung der Darstellungsparameter verwendet werden.

8. Verfahren nach einem der Ansprüche 1 bis 7,
**dadurch gekennzeichnet,**
**dass** vor dem Anaylsieren der Druckdaten diese in bestimmte Farbauszüge zerlegt werden, wobei die Bildanalyseverfahren einzeln auf die Farbauszüge angewandt werden.

9. Verfahren nach Anspruch 8,
**dadurch gekennzeichnet,**
**das** die Farbauszüge mittels Polynomialkurven und jeweils einem Satz Stützpunkten dargestellt werden.

10. Verfahren nach einem der Ansprüche 1 bis 9,
**dadurch gekennzeichnet,**
**dass** die Druckdaten zusammen mit dem automatisch ermittelten Darstellungsparameter auf einem zu einem Drucker vorgeordneten Gerät, wie z.B. einem Druckserver gespeichert werden.

11. Verfahren nach Anspruch 10,
**dadurch gekennzeichnet,**
**dass** unterschiedliche Druckdaten mit Ihren jeweiligen Darstellungsparametern zu einem Druckauftrag zusammengefasst werden und an einem Drucker zum Ausdruck gebracht werden.

12. Verfahren nach Anspruch 10 oder 11,
**dadurch gekennzeichnet,**
**dass** die Darstellungsparameter in Ausgabeparameter zur Steuerung eines Druckvorganges angesetzt werden.

13. Verfahren nach einem der Ansprüche 1 bis 9,
**dadurch gekennzeichnet,**
**dass** die automatisch ermittelten Darstellungsparameter unmittelbar zur Steuerung eines Druckvorganges verwendet werden.

14. Verfahren nach einem der Ansprüche 1 bis 13,
**dadurch gekennzeichnet,**
**dass** das Unterteilen der Druckdaten in Segmente automatisch mittels eines Bildanalyseverfahrens erfolgt.

15. System zum automatischen Aufbereiten von Druckdaten für einen Druckvorgang, das einen Computer umfasst, auf dem ein Computerprogramm zum Ausführen eines Verfahrens nach einem der Ansprüche 1 bis 14 gespeichert und ausführbar ist.

## Claims

1. Method for the automatic preparation of print data for a printing process, comprising the following steps:
- reading-in of print data,
- provision of the print data together with the automatically determined presentation parameters to control a printing process,
**characterized by** the further steps:
- sub-division of the print data into segments,
- analysis of the segments with an image analysis method for the automatic determination of presentation parameters for the respective segments, wherein the image content of the segments is analyzed for colour depth, contrast, sharpness, brightness, colour space, detail richness and/or resolution.

2. Method according to claim 1,
**characterized in that**
a specific image analysis method is selected depending on the respective data type of the segment.

3. Method according to claim 1 or 2,
**characterized in that**
a Fourier analysis or frequency analysis is used as an image analysis method to determine the resolution of the print data of a segment.

4. Method according to any of the claims 1 to 3,
**characterized in that**
an expert system is used as an image analysis method, to which expert system are provided as input values the print data of the segment, which can include format data, and possibly parameters determined by means of pre-analysis methods, to which print data the presentation parameters are assigned.

5. Method according to any of the claims 1 to 4,
**characterized in that**
a neural network is used as an image analysis method, to which neural network are provided as input values the print data of the segment which can include format data and possibly parameters determined by means of pre-analysis methods, to which print data the presentation parameters are assigned.

6. Method according to any of the claims 1 to 5,
**characterized in that**
a fractal image analysis method is used as an image analysis method with which self-similar segments can be extracted.

7. Method according to any of the claims 1 to 6,
**characterized in that,**
information contained in a job ticket is used to determine the presentation parameters or render them more precisely.

8. Method according to any of the claims 1 to 7,
**characterized in that,**
before the analysis of the print data, these are broken down into specific colour separations, wherein the image analysis methods are individually applied to the colour separations.

9. Method according to claim 8,
**characterized in that**
the colour separations are represented by means of polynominal curves and a respective set of support points.

10. Method according to any of the claims 1 to 9,
**characterized in that**
the print data, together with the automatically determined presentation parameters, are stored on an apparatus, for example a print server, arranged upstream of a printer.

11. Method according to claim 10,
**characterized in that**
different print data are combined with their respective presentation parameters into a print job and are printed out at a printer.

12. Method according to claim 10 or 11,
**characterized in that**
the presentation parameters are transformed into output parameters to control a printing process.

13. Method according to any of the claims 1 to 9,
**characterized in that**
the automatically determined presentation parameters are used to directly control a printing process.

14. Method according to any of the claims 1 to 13,
**characterized in that**
the sub-division of the print data into segments occurs automatically by means of an image analysis method.

15. System for the automatic preparation of print data for a printing process, which system comprises a computer on which a computer program for the execution of a method according to any of the claims 1 to 14 is stored and can be executed.

## Revendications

1. Procédé de préparation automatique de données d'impression pour une impression, comprenant les étapes suivantes :
- lecture des données d'impression,
- mise à disposition des données d'impression avec des paramètres de représentation déterminés automatiquement pour piloter une impression, **caractérisé par** les autres étapes suivantes :
- division des données d'impression en segments,
- analyse des segments avec un procédé d'analyse d'images pour déterminer automatiquement les paramètres de représentation pour les segments respectifs, l'analyse du contenu d'images des segments portant sur l'intensité des couleurs, le contraste, la netteté, la luminosité, l'espace des couleurs, la richesse en détails et/ou la résolution.

2. Procédé selon la revendication 1, **caractérisé en ce qu'**un certain procédé d'analyse d'images est sélectionné en fonction du type de données respectif du segment.

3. Procédé selon la revendication 1 ou 2, **caractérisé en ce que**, comme procédé d'analyse d'images, on utilise une analyse de Fourier ou une analyse de fréquences pour déterminer la résolution des données d'impression d'un segment.

4. Procédé selon l'une quelconque des revendications 1 à 3, **caractérisé en ce que**, comme procédé d'analyse d'images, on utilise un système expert dans lequel on peut introduire comme valeurs d'entrée les données d'impression du segment, les données de formatage, et pour lequel certains paramètres sont disponibles éventuellement au moyen de procédés de pré-analyse auxquels sont affectés les paramètres de représentation.

5. Procédé selon l'une quelconque des revendications 1 à 4, **caractérisé en ce que,** comme procédé d'analyse d'images, on utilise un réseau neuronal dans lequel peuvent être introduites comme données d'entrée les données d'impression du segment, les données de formatage, et pour lequel certains paramètres sont disponibles éventuellement au moyen de procédés de pré-analyse auxquels sont affectés les paramètres de représentation.

6. Procédé selon l'une quelconque des revendications 1 à 5, **caractérisé en ce que**, comme procédé d'analyse d'images, on utilise un procédé d'analyse d'images fractal, avec lequel on peut extraire même les segments analogues.

7. Procédé selon l'une quelconque des revendications 1 à 6, **caractérisé en ce qu'**on utilise des informations contenues dans un ticket de travail électronique pour déterminer ou spécifier les paramètres de représentation.

8. Procédé selon l'une quelconque des revendications 1 à 7, **caractérisé en ce qu'**avant l'analyse des données d'impression, on divise celles-ci en sélections déterminées de couleurs, les procédés d'analyse d'images étant appliqués individuellement à la sélection de couleurs.

9. Procédé selon la revendication 8, **caractérisé en ce qu'**on représente les sélections de couleurs au moyen de courbes polynomiales et respectivement d'un ensemble de points de reprise.

10. Procédé selon l'une quelconque des revendications 1 à 9, **caractérisé en ce qu'**on stocke les données d'impression avec le paramètre de représentation déterminé automatiquement sur un appareil disposé en amont d'une imprimante, tel qu'un un serveur d'impression, par exemple.

11. Procédé selon la revendication 10, **caractérisé en ce que** différentes données d'impression avec leurs paramètres de représentation respectifs sont résumées sous la forme d'une tâche d'impression, et conduites à une imprimante en vue d'une sortie sur support en papier.

12. Procédé selon la revendication 10 ou 11, **caractérisé en ce que** les paramètres de représentation sont joints aux paramètres de sortie pour piloter une impression.

13. Procédé selon l'une quelconque des revendications 1 à 9, **caractérisé en ce qu'**on utilise directement les paramètres de représentation déterminés automatiquement pour piloter une impression.

14. Procédé selon l'une quelconque des revendications 1 à 13, **caractérisé en ce que** la division des données d'impression en segments se réalise automatiquement au moyen d'un procédé d'analyse d'images.

15. Système de préparation automatique de données d'impression pour une impression, comprenant un ordinateur, sur lequel un programme informatique est stocké et peut être exécuté pour mettre en oeuvre un procédé selon l'une quelconque des revendications 1 à 14.
